Europäisches Patentamt

European Patent Office

Office européen des brevets

(11) Veröffentlichungsnummer: **0 082 502**
**B1**

(12) # EUROPÄISCHE PATENTSCHRIFT

(45) Veröffentlichungstag der Patentschrift:
18.03.87

(51) Int. Cl.⁴: **C 08 F 210/02**

(21) Anmeldenummer: **82111737.1**

(22) Anmeldetag: **17.12.82**

(54) **Verwendung von Ethylen-Mischpolymerisaten für Schwergutsäcke oder Schrumpffolien, daraus hergestellte Schwergutsäcke und Verfahren zur Herstellung der Ethylen-Mischpolymerisate.**

(30) Priorität: **19.12.81 DE 3150401**

(43) Veröffentlichungstag der Anmeldung:
**29.06.83 Patentblatt 83/26**

(45) Bekanntmachung des Hinweises auf die Patenterteilung:
**18.03.87 Patentblatt 87/12**

(84) Benannte Vertragsstaaten:
**AT BE CH DE FR GB IT LI LU NL SE**

(56) Entgegenhaltungen:
**DE-A-1 924 823**
**DE-A-1 955 471**
**FR-A-1 477 186**
**FR-A-2 128 547**

(73) Patentinhaber: **Ruhrchemie Aktiengesellschaft,
Bruchstrasse 219, D-4200 Oberhausen 13 (DE)**
Patentinhaber: **Imhausen- Chemie Gesellschaft mit
beschränkter Haftung, Kaiserstrasse 95, D-7630
Lahr (DE)**

(72) Erfinder: **Imhausen, Karl- Heinz, Prof.Dr.Dr.h.c.,
Verstorben (DE)**
Erfinder: **Hippenstiel- Imhausen, Jürgen,
Dr.rer.oec., Hochstrasse 8, D-7630 Lahr (DE)**
Erfinder: **Berndt, Rüdiger, Dipl.- Ing., Am
Jinglingsberg 3, D-7632 Heiligenzell (DE)**
Erfinder: **Hermann, Frank, Sonnhalde 5, D-7630
Lahr- Kuhbach (DE)**
Erfinder: **Schöffel, Friedrich, Im Nägele 11, D-7630
Lahr (DE)**
Erfinder: **Zink, Jürgen, Dipl.- Ing., Verstorben (DE)**
Erfinder: **Beckemeier, Heinz, Dipl.- Ing.,
Holzstrasse 22, D-4200 Oberhausen 13 (DE)**
Erfinder: **Riepe, Volker, Dipl.- Ing., Vennstrasse 8,
D-4200 Oberhausen 13 (DE)**
Erfinder: **Zoller, Wilhelm, Dr. Dipl.- Chem., Im
Torfveen 26, D-4200 Oberhausen 14 (DE)**

(74) Vertreter: **Türk, Dietmar, Dr. rer. nat., Türk, Gille
+ Hrabal Patentanwälte Bruckner Strasse 20,
D-4000 Düsseldorf 13 (DE)**

## Beschreibung

Die Erfindung betrifft die Verwendung von Ethylen-Mischpolymerisaten der weiter unten angegebenen Zusammensetzung und mit den weiter unten angegebenen Eigenschaften zur Herstellung von Schwergutsäcken für schweres Füllgut mit einem Schüttgewicht von mehr als 0,3 kg/dm³ und Füllgutmengen von mindestens etwa 10 kg oder Schrumpffolien, die daraus hergestellten Schwergutsäcke und Verfahren zur Herstellung der Ethylen-Mischpolymerisate.

Schwergutsäcke sind Behälter für verhältnismäßig große Mengen und/oder verhältnismäßig schwere Füllgüter. In der Regel enthalten sie 10 bis 50 kg Füllgut. Diese Säcke müssen eine Vielzahl von chemischen und mechanischen Eigenschaften haben, weil sie im gefüllten Zustand beim Transport und bei der Lagerung einer sehr rauhen Behandlung unterworfen werden. Bei möglichst geringer Wandstärke der Folien, aus denen die Schwergutsäcke bestehen, sollen sie möglichst große mechanische Belastungen aushalten können. Hierzu gehört, daß sie eine ausreichende Zähigkeit und hohe Reißfestigkeit aufweisen. Insbesondere sollen sich die Säcke durch Festigkeit der Falzkanten und der Schweißnähte auszeichnen. Darüber hinaus sollen sie stapelfähig sein und eine weitgehende Beständigkeit gegen Fall besitzen.

Aus DE-A-1 955 471 sind Ethylen/Vinylacetat-Mischpolymerisate bekannt, die dadurch hergestellt werden, daß Ethylen mit bis zu 20 Gew.-% Vinylacetat in Gegenwart von Propionaldehyd als Modifizierungsmittel in einem Molekularverhältnis von 0,1 bis 0,5 % bei einer Temperatur von 120 bis 300°C und einem Druck von 1500 bis 2300 bar hergestellt werden. Auch aus FR-A-I 477 186 sind Ethylen/Vinylacetat-Mischpolymerisate bekannt, die aus den Ausgangsmonomeren durch Polymerisation bei einer Temperatur zwischen 120 und 260°C und einem Druck zwischen 1400 und 2000 bar in Gegenwart von n-Butan und/oder n-Propan als Modifizierungsmittel und eines freie Radikale liefernden Katalysators hergestellt werden. Aus der DE-A-1 924 823 sind Ethylen/Vinylacetat/Alken-Mischpolymerisate bekannt, die 1,5 bis 10 Gew.-% Vinylacetateinheiten und 0,3 bis 2 Gew.-% Alken-, insbesondere Propylen-Einheiten enthalten, die nach dem sogenannten Autoklaven-Verfahren oder in einem Rohrreaktor bei Temperaturen von 177 bis 302°C und erhöhtem Druck durch Polymerisation der Ausgangsmonomeren in Gegenwart von Peroxid-Katalysatoren hergestellt werden. Ein ähnliches Verfahren ist auch in der BE-A-629 606 beschrieben. Die so hergestellten Terpolymerisate sollen sich dadurch auszeichnen, daß daraus hergestellte Folien einer Dicke von beispielsweise 25 µm gute optische Eigenschaften, eine gute Steifheit und Reißfestigkeit aufweisen. Außerdem sind in verschiedenen Firmenschriften, beispielsweise in der Broschüre "Kunststoffe Hoechst ® Hostalen LD" und in dem Merkblatt "® Lupolen 1840 D" der Firma BASF AG nach dem Hochdruckverfahren hergestellte Ethylenhomo- und -mischpolymerisate beschrieben, die sich zur Herstellung von Folien für Schwergutsäcke eignen.

Die bisher bekannten Ethylenhomo- und -mischpolymerisate sind jedoch nicht in bezug auf alle gewünschten Eigenschaften zufriedenstellend, insbesondere ergeben sie zu geringe Dart-Drop-Werte, ihr Elastizitätmodul ist nicht zufriedenstellend und ihre Schlagzähigkeitswerte und ihre Reißfestigkeit sind ebenfalls unbefriedigend.

Um diesen Anforderungen besser gerecht zu werden, wurde sogenanntes LLDPE (lineares Polyethylen mit niedriger Dichte) hergestellt und zu Folien verarbeitet. Das Verfahren zur Herstellung von LLDPE ist jedoch verhältnismäßig kompliziert und erfordert spezielle, empfindliche Katalysatoren sowie spezielle Apparaturen, insbesondere Extruder für die Verarbeitung zu Folien (vgl. Modern Plastics International, Juli 1980, Seite 30 ff). Das in letzter Zeit zur Herstellung von Folien für Schwergutsäcke angebotene LLDPE erfüllt jedoch die an es gestellten Anforderungen nicht ausreichend oder nur dann, wenn die daraus hergestellten Schwergutsäcke sehr hohe Wandstärken aufweisen, die naturgemäß einen unerwünscht hohen Materialverbrauch mit sich bringen. Darüber hinaus lassen sich Schrumpffolien aus LLDPE praktisch nicht herstellen und die bekannten LLDPE-Typen erfordern für den Schrumpfvorgang verhältnismäßig hohe Temperaturen, die bei etwa 150 bis 160°C liegen. Erwünscht sind aber niedrigere Schrumpftemperaturen. Außerdem soll vermieden werden, daß während des Schrumpfvorganges ein Verschweißen der Folien mit den zu umhüllenden Kunststoffverpackungen erfolgt.

Wegen der zunehmenden Bedeutung der Rohstoffe und dem Bestreben, diese so weit wie möglich einzusparen, besteht daher ein großes Bedürfnis, Mischpolymerisate bzw. Verfahren zu ihrer Herstellung zu finden, aus denen Folien mit ausreichenden mechanischen Eigenschaften in möglichst geringer Stärke hergestellt werden können, um den Materialverbrauch so niedrig wie möglich zu halten.

Aufgabe der Erfindung war es daher, Ethylen-Mischpolymerisate und Verfahren zu ihrer Herstellung zu finden, die auf technisch einfache Weise in Rohrreaktoren hergestellt und in üblichen bekannten Anlagen zu Schwergutsäcken mit verhältnismäßig geringer Wandstärke oder Schrumpffolien verarbeitet werden können, welche die gewünschte Kombination von guten Eigenschaften aufweisen, die für diesen Verwendungszweck wesentlich sind.

> Es wurde nun überraschend gefunden, daß in gut reproduzierbarer Weise in hoher Ausbeute Ethylen-Mischpolymerisate mit den obengenannten vorzüglichen Eigenschaften hergestellt werden können, wenn deren Herstellung unter den nachstehend angegebenen spezifischen Bedingungen erfolgt.

Gegenstand der Erfindung ist die Verwendung von Ethylen-Mischpolymerisaten, die einpolymerisiert enthalten: 95,9 bis 99 Gew.-% Ethylen sowie zusätzlich

a) 4 bis 0,3 Gew.-% Vinylacetat und/oder Vinylpropionat und

b) 3,5 bis 0,1 Gew.-% gesättigte aliphatische Aldehyde mit 2 bis 5 C-Atomen im Alkylteil, gesättigte aliphatische Ketone mit 1 oder 2 C-Atomen in den Alkylteilen, Alkene mit 3 bis 6 Kohlenstoffatomen und/oder Cyclohexen,
mit einer Dichte von 0,920 bis 0,930 g/cm$^3$, einem Schmelzindex MFI 190/2,16 von 0,1 bis 0,5 g/10 min, einem Zahlenverhältnis der Schmelzindices (MFI 190/5): (MFI 190/2,16) von 3,2 bis 3,9, einer Scherviskosität bei 200° C bei einer Schubspannung von 4 . 10$^5$ Pa im Bereich von 1500 bis 2000 Pa.s und bei einer Schubspannung von 6 . 10 Pa im Bereich von 80 bis 120 Pa.s, einer Vicat-Temperatur von 104 bis 106° C, einer Schlagzugzähigkeit von mehr als 1800 mJ/mm$^2$ und einer Spannungsrißkorrision von mehr als 1500 h, zur Herstellung von Schwergutsäcken für schweres Füllgut mit einem Schüttgewicht von mehr als 0,3 kg/dm$^3$ und Füllgutmengen von mindestens etwa 10 kg oder als Schrumpffolien.

Die Werte für die vorstehend angegebene Schlagzugzähigkeit und Spannungsrißkorrosion wurden nach DIN 53 448 bzw. nach ASTM D-1693/70 in 1 Volumenteil Pril ® und 3 Volumenteilen destilliertem Wasser gemessen.

Das erfindungsgemäß verwendete Ethylen-Mischpolymerisat, das vorzugsweise eine Dichte von 0,924 bis 0,928 g/cm$^3$ hat und vorzugsweise einen Schmelzindex MFI 190/216 von 0,5 bis 0,4 g/10 min aufweist und vorzugsweise einen Dart-Drop-Wert WF 50 (gemessen nach ASTM D 1709/75) von mindestens 450 g aufweist, wird gemäß einer bevorzugten Ausgestaltung der Erfindung hergestellt durch kontinuierliche Polymerisation der Monomeren in einem rohrförmigen Reaktor bei Drucken von 1000 bis 4000 bar und erhöhter Temperatur in Gegenwart von Radikalebildenden Katalysatoren und Kettenübertragungsmitteln, wobei das Monomerengemisch, enthaltend

a) 0,3 bis 4,0 Gew.-% Vinylacetat und/oder Vinylpropionat

b) 0,2 bis 3,5 Gew.-% gesättigte aliphatische Aldehyde mit 2 bis 5 C-Atomen im Alkylteil, gesättigte aliphatische Ketone mit 1 oder 2 C-Atomen in den Alkylteilen, Alkene mit 3 bis 6 Kohlenstoffatomen und/oder Cyclohexen

bei Temperaturen im Bereich von 190 bis 270°C polymerisiert wird, wobei

30 bis 70 Gew.-% des Monomerengemisches am Eingang des Röhrreaktors und der restliche Anteil an mindestens einer Stelle längs des Rohrreaktors eingespeist werden.

Gemäß weiteren bevorzugten Ausgestaltungen der Erfindung enthält das erfindungsgemäß verwendete Ethylen-Mischpolymerisat als Komponente (a) Vinylacetat und als Komponente (b) gesättigte aliphatische Ketone mit 1 oder 2 Kohlenstoffatomen in den Alkylteilen, insbesondere Aceton oder Methylethylketon, oder Propen. Vorzugsweise wird es bei Drucken von 2000 bis 3500 bar hergestellt.

Gegenstand der Erfindung ist ferner ein Verfahren zur Herstellung des vorstehend beschriebenen Ethylen-Mischpolymerisats durch kontinuierliche Polymerisation der Monomeren in einem rohrförmigen Reaktor bei Drucken von 1000 bis 4000 bar und erhöhter Temperatur in Gegenwart von Radikal-bildenden Katalysatoren und Kettenübertragungsmitteln, das dadurch gekennzeichnet ist, daß das Monomergemisch, das zusätzlich zu 95,9 bis 99 Gew.-% Ethylen enthält

a) 0,3 bis 4,0 Gew.-% Vinylacetat und/der Vinylpropionat und

b) 0,1 bis 3,5 Gew.-% gesättigte aliphatische Aldehyde mit 2 bis 5 C-Atomen im Alkylteil, gesättigte aliphatische Ketone mit 1 oder 2 C-Atomen in den Alkylteilen, Alkene mit 3 bis 6 Kohlenstoffatomen und/oder Cyclohexen,

bei Temperaturen im Bereich von 190 bis 270°C polymerisiert wird, wobei

30 bis 70 Gew.-% des Monomergemisches am Eingang des Rohrreaktors und der restliche Anteil an mindestens zwei Stellen längs des Rohrreaktors eingespeist werden,

dessen Verhältnis von Länge zu Durchmesser im Bereich von etwa 25000 bis etwa 60000 : 1 liegt.

Gemäß einer bevorzugten Ausgestaltung der Erfindung werden von dem Monomerengemisch

40 bis 60 Gew.-% am Eingang des Rohrreaktors,

15 bis 11 Gew.-% an der ersten Einspeisestelle,

19 bis 13 Gew.-% an der zweiten Einspeisestelle und

26 bis 16 Gew.-% an der dritten Einspeisestelle längs des Rohrreaktors eingespeist, während ganz besonders bevorzugt von dem Monomerengemisch

30 bis 50 Gew.-% am Eingang des Rohrreaktors,

11 bis 10 Gew.-% an der ersten Einspeisestelle,

14 bis 11 Gew.-% an der zweiten Einspeisestelle,

19 bis 13 Gew.-% an der dritten Einspeisestelle und

24 bis 16 Gew.-% an der vierten Einspeisestelle längs des Rohrreaktors eingespeist werden.

Gegenstand der Erfindung ist ferner die Verwendung der vorstehend beschriebenen Ethylen-Mischpolymerisate zur Herstellung von Schwergutsäcken für schweres Füllgut mit einem Schüttgewicht von mehr als 0,3 kg/dm$^3$ und Füllgutmengen von mindestens etwa 10 kg oder zur Herstellung von Schrumpffolien, insbesondere Folien mit einer Stärke von 10 bis 300 µm.

Einen weiteren Gegenstand der Erfindung bilden schließlich die aus einem Ethylen-Mischpolymerisat der vorstehend beschriebenen Art hergestellten Schwergutsäcke für schweres Füllgut mit einem Schüttgewicht von mehr als 0,3 kg/dm$^3$ und Füllgutmengen von mindestens etwa 10 kg.

Zur Herstellung der erfindungsgemäß verwendeten Ethylen-Mischpolymerisate können die an sich bekannten rohrförmigen Reaktoren eingesetzt werden, die ein Verhältnis von Länge zu Durchmesser im Bereich von etwa 10 000 : 1 bis 100 000 : 1 aufweisen. Vorzugsweise liegt die untere Grenze für dieses Verhältnis bei etwa 20 000 : 1, besonders bevorzugt bei etwa 25 000 : 1. Die obere Grenze liegt vorzugsweise bei etwa 80 000 : 1, besonders bevorzugt bei etwa 60 000 : 1. Diese Reaktoren haben in der Regel eine Länge von etwa 400 bis 4000 m, wobei die untere Grenze vorzugsweise bei etwa 800 m liegt. Die obere Grenze liegt vorzugsweise bei etwa 3000 m, besonders bevorzugt bei etwa 2000 m. Es handelt sich hierbei um die üblichen Abmessungen von großtechnischen Reaktoren zur Herstellung von Polyethylen mit niedriger Dichte (LDPE).

Es ist gemäß der Erfindung wesentlich, daß die Polymerisation in einem im Vergleich zum Stand der Technik relativ engen Temperaturbereich durchgeführt wird. Nachdem die Reaktion angesprungen ist, soll die Temperatur im Reaktor 190°C, vorzugsweise 195°C, besonders bevorzugt 200°C nicht unterschreiten. Andererseits soll die Temperatur 270°C, besonders bevorzugt 260°C nicht übersteigen. Die Regelung der Temperatur erfolgt in an sich bekannter Weise durch teilweise Kühlung des Rohrreaktors und insbesondere durch Einspeisen von sogenanntem Kaltgas, dessen Temperatur zwischen etwa 0 und 60°C liegt. Darunter wird verstanden, daß man Monomere gegebenenfalls mit einem Gehalt an radikalbildenden Katalysatoren und Kettenübertragungsmitteln an Stellen längs des rohrförmigen Reaktors einspeist. Es hat sich herausgestellt, daß es gemäß den Verfahren der Erfindung besonders zweckmäßig ist, an 3 oder 4 Stellen derartiges Kaltgas einzuspeisen. Die Mengen des eingespeisten Kaltgases werden so gewählt, daß im Reaktor die oben beschriebenen Temperatur-Grenzen erhalten bleiben.

Das Monomerengemisch enthält naturgemäß auch Initiator. Bevorzugt enthält das längs des Rohrreaktors eingespeiste Gemisch auch alle Bestandteile, die am Eingang des Reaktors eingespeist werden, d.h. das Einsatzgemisch wird aufgeteilt auf die Einspeisung am Eingang des Reaktors und die Einspeisestellen längs des Reaktors.

Bevorzugt wird am Eingang 45 bis 55 Gew.-%, an der ersten Einspeisestelle 15 bis 13 Gew.-%, an der zweiten Einspeisestelle 18 bis 14 Gew.-% und an der dritten Einspeisestelle 23 bis 13 Gew.-% eingespeist.

Die Einspeisestellen liegen an den Stellen des Rohrreaktors, an denen das Reaktionsgemisch zwar eine Temperatur von 230°C überschritten, die oben definierten maximalen Temperaturen aber nicht überschritten hat. Wenn die Temperatur im Rohrreaktor die genannte Mindesttemperatur von 230° C überschritten hat, ist es möglich, daß die Temperatur eine Maximaltemperatur erreicht und dann die Temperatur abfällt. In diesem Fall muß auch nach Durchlaufen des Maximums oberhalb der genannten Mindesttemperatur eingespeist werden. Bevorzugt liegt die Mindesttemperatur oberhalb 240°C, besonders bevorzugt oberhalb 250°C. Im allgemeinen wird ein höherer Umsatz erzielt, wenn die Mindesttemperatur im oberen genannten Bereich liegt. Zweckmäßig wird etwa an einem derartigen Temperaturmaximum oder danach eingespeist. Die maximale Temperatur, die im Rohrreaktor erreicht wird, kann in bekannter Weise durch die Menge Initiator gesteuert werden, die dem Monomerengemisch zugefügt wird. Gegebenenfalls kann die Menge an Initiator im Monomerengemisch, das am Reaktoreingang eingespeist wird, abweichen von der Menge, die in dem Monomerengemisch vorliegt, das längs des Reaktors eingespeist wird.

Während der Durchführung der Polymerisation ist es, wie nach dem Stand der Technik, zweckmäßig, durch kurzzeitiges starkes Öffnen des Reaktor-Ausgangsventils den Druck periodisch im Reaktor abzusenken (sogenanntes Reizen).

Es werden die nach dem Stand der Technik üblichen Initiatoren für die Polymerisation verwendet, wobei Sauerstoff und Peroxide, insbesondere Sauerstoff bevorzugt ist. Die Initiatormengen liegen im Bereich, wie aus dem Stand der Technik bekannt ist.

Zur Polymerisation werden in an sich bekannter Weise sogenannte Kettenübertragungsmittel dem Monomerengemisch zugesetzt. Ein Beispiel hierfür ist Propan in Mengen bis 5 Gew.-%.

Die gemäß der Erfindung verwendeten Ethylen-Mischpolymerisate weisen eine Kombination von überraschend vielen außerordentlich wertvollen Eigenschaften für diesen Verwendungszweck auf, die weder von LDPE noch von LLDPE allein erreicht werden, wie nachfolgend erläutert wird.

Für Schwergutsäcke, die bis zu 50 kg Füllgut aufnehmen sollen, genügen Wandstärken von max. 180 µm, vorzugsweise max. 160 µm und besonders bevorzugt max. 150 µm. Für geringere Füllgutmengen genügen entsprechend niedrigere Wandstärken. Bei einer Füllgutmenge von 10 kg kann schon eine Wandstärke von 60 µm ausreichend sein.

Schwergutsäcke für eine Füllgutmenge von etwa 25 kg werden besonders häufig verwendet für Füllgüter mit einem Schüttgewicht von etwa 0,3 bis 2,0 kg/dm³.

Schwergutsäcke für Füllgutmengen von mehr als etwa 25 kg bis zu etwa 50 kg sollen in der Regel Füllgüter mit einem Schüttgewicht von 0,4 bis 2,0 kg/dm³ aufnehmen. Es können häufig schon Wandstärken von 60 µm ausreichen. Dies ist ein extrem niedriger, bisher nicht für möglich gehaltener Wert.

Die Erweichungstemperaturen betragen zweckmäßig etwa 104 bis 106°C (DIN 53 460, ASTM D-1525).

Die Verarbeitbarkeit der Mischpolymerisat-Granulate zur Herstellung von Folien im Folienextruder ist mit einem dem LDPE vergleichbaren sehr geringen Energieaufwand möglich. Der Energieaufwand ist jedoch deutlich niedriger als für die Verarbeitung von LLDPE. Von besonderer Bedeutung ist in diesem Zusammenhang die Möglichkeit, die erfindungsgemäß verwendeten Ethylenmischpolymerisate auf herkömmlichen Extrudern zu verarbeiten, auf denen auch LDPE extrudiert wird. Für LLDPE müssen zu diesem Zweck vorhandene Maschinen modifiziert oder Spezialeinrichtungen eingesetzt werden.

Die gemäß der Erfindung verwendeten Mischpolymerisate haben bei gleicher Zugfestigkeit wie LLDPE eine überraschend hohe Stoß- und Reißfestigkeit. Sie ist deutlich höher als die entsprechender LDPE-Folien. Die Messung der Stoßfestigkeit (dart drop) erfolgt nach der in ASTM D 1709/75 beschriebenen Methode, die Reißfestigkeit und Reißdehnung werden nach DIN 53 455 bestimmt. Während die Stoßfestigkeit (gemessen jeweils an 90 µm Folien, Aufblasverhältnis 1 : 2,5) für Folien aus LDPE etwa 3,3 bis 5,0 g/µm und für LLDPE-Folien 1,5 bis 4,5 g/µm beträgt, besitzen die erfindungsgemäß verwendeten Folien eine Stoßfestigkeit von 5,5 bis 8,0 g/µm.

4

Die Reißfestigkeit (gemessen an denselben Folien) liegt bei LDPE-Folien im Bereich von 20 bis 25 N/mm$^2$ und bei LLDPE-Folien im Bereich von 30 bis 35 N/mm$^2$; die erfindungsgemäß verwendeten Folien weisen eine Reißfestigkeit in Längs- und Querrichtung von 23 bis 32 N/mm$^2$ auf.

Besondere Bedeutung hat die Festigkeit der Falzkanten, d.h. der Kanten, die entstehen, wenn der Folienschlauch flach gelegt wird. Sie kann z.B. über den Schlagzugversuch nach DIN 53 448 (Probekörper nach Bild 3) bestimmt werden. Dabei zeigt sich, daß die Abnahme der Festigkeit gegenüber dem Grundmaterial nur 20 bis 30 % beträgt gegenüber 40 bis 60 % bei den nach dem Stand der Technik eingesetzten Folien.

Die gemäß der Erfindung verwendeten Folien besitzen in Kombination mit den hohen Werten für die Festigkeit weiterhin eine ganz ausgezeichnete Transparenz. Die Transparenz ist für Schwergutsäcke von besonderer Bedeutung, weil naturgemäß ein großes Bedürfnis dafür besteht, das äußere Erscheinungsbild des Sackinhaltes leicht und sicher in Augenschein zu nehmen.

Weiterhin ist von Bedeutung, daß nach Einfüllen des Füllgutes die Säcke durch Verschweißen leicht und sicher verschlossen werden können, wobei berücksicht werden muß, daß eine Verschmutzung der zu verschweißenden Oberflächen durch das Einfüllen des Füllgutes zu Störungen führen kann.

Eine wichtige Eigenschaft ist in diesem Zusammenhang, daß zur Verschweißung der unter Verwendung der erfindungsgemäßen Mischpolymerisatfolien hergestellten Schwergutsäcke eine gegenüber LDPE-Folien 10 bis 20°K und gegenüber LLDPE-Folien 20 bis 30°K niedrigere Temperatur und damit ein geringerer Energieaufwand ausreicht. Außerdem ist es wichtig, daß die Schweißnähte keine geringeren Festigkeitswerte oder nur wenig geringere Festigkeitswerte haben als die Folien an sich. Es darf also nicht geschehen, daß die Schweißnähte leicht aufreißen. In dieser Beziehung wurde überraschenderweise gefunden, daß bei den gemäß der Erfindung verwendeten Mischpolymerisatfolien größere Schwankungen in den Schweißparametern wie Temperatur, Anpreßdruck und Verteilung des Anpreßdruckes praktisch ohne Einfluß auf die Festigkeit der Schweißnaht bleiben. Der Schweißfaktor, d.h. das Verhältnis von Festigkeit der Schweißnaht zur Festigkeit der unbehandelten Folie beträgt 0,95 bis 1,0.

Mit herkömmlichen Druckfarben lassen sich die Schwergutsäcke hervorragend bedrucken. Die Haftung der Farben auf der Sackfolie ist ausgezeichnet, das Druckbild scharf kontuiert und deutlich.

Das Verhalten der unter erfindungsgemäßer Verwendung von Mischpolymerisatfolien hergestellten Schwergutsäcke bei Temperaturen unterhalb 0°C ist deutlich besser als bei den Produkten des Standes der Technik. So weisen sie z.B. bei -20°C eine um mehr als 30 % bessere Zähigkeit, gemessen nach DIN 53 448, auf, als die oben erwähnten LDPE-Folien.

Zur Herstellung der Schwergutsäcke gemäß der Erfindung kann das oben definierte Ethylen-Mischpolymerisat auch mit Mengen von bis zu etwa 25 Gew.-%, vorzugsweise von etwa bis zu 15 Gew.-% und besonders bevorzugt in Mengen bis zu etwa 10 Gew.-% mit anderen Ethylen-Polymerisaten oder Ethylen-Mischpolymerisaten vermischt werden, insbesondere mit sogenanntem HDPE, d.h. Polyethylen hoher Dichte, zweckmäßig im Bereich von 0,940 bis 0,970.

Die unteren Grenzwerte für die beigemischten Polymerisate liegen deshalb zweckmäßig bei etwa 2 Gew.-%, vorzugsweise bei etwa 5 Gew.-% und besonders bevorzugt bei etwa 8 Gew.-%.

Zur Herstellung der Schwergutsäcke werden zunächst Folien hergestellt. Die Herstellung der Folien erfolgt in an sich bekannter Weise, wobei besonders vorteilhaft ist, daß die verwendeten Polymerisate in den seit Jahrzehnten bekannten Folienherstellungsmaschinen ohne besondere Zusatzeinrichtungen oder Maßnahmen verarbeitet werden können. Zweckmäßig werden Blasfolien hergestellt. Im Vergleich zur Verarbeitung des oben erwähnten LLDPE ist ein erheblich geringerer Energieaufwand bei der Herstellung der Folien erforderlich. Dieser kann beim LLDPE um bis zu 40 % höher liegen als bei der Verarbeitung der gemäß der Erfindung verwendeten Mischpolymerisate.

Die Herstellung der Folien erfolgt wie nach dem Stand der Technik gegebenenfalls unter Zusatz üblicher Hilfs- und Zusatzstoffe, z.B. Antioxidantien, wie sterisch gehinderte Phenole in Mengen von etwa 0,01 bis 0,3 Gew.-%, Lichtschutzmittel wie Hydroxybenzophenone in Mengen von etwa 0,01 bis 0,3 Gew.-%, Gleitmittel wie Säureamide in Mengen von etwa 0,02 bis 0,5 Gew.-%, Antiblockmittel wie feinstteiliges Siliciumdioxid in Mengen von etwa 0,05 bis 0,5 Gew.-%, organische Farbstoffe, Pigmente wie Titandioxid oder Ruß in Mengen von etwa 0,05 bis 5 Gew.-%, Füllstoffe wie Kaolin, Talkum oder Calciumcarbonat mit einem mittleren Teilchendurchmesser von max. 10 μm in Mengen von etwa 0,1 bis 10 Gew.-%, Antistatika wie organische Stickstoffverbindungen in Mengen von etwa 0,05 bis 0,5 Gew.-%.

Die Herstellung der Folien erfolgt in an sich bekannter Weise, wobei besonders vorteilhaft ist, daß die seit Jahrzehnten bekannten Folienherstellungsmaschinen ohne besondere Zusatzeinrichtungen oder Maßnahmen eingesetzt werden können. Es können Schlauchfolien und Flachfolien in an sich bekannter Weise hergestellt werden. Im Vergleich zur Verarbeitung des oben erwähnten LLDPE ist ein erheblich geringerer Energieaufwand bei der Herstellung der Folien erforderlich. Nach dem genannten bekannten Verfahren kann der Energieaufwand um bis zu 40 % höher liegen als bei der Verarbeitung gemäß der Erfindung. Folien aus dem erfindungsgemäßen Mischpolymerisat lassen sich besser verschweißen, insbesondere auf Automaten. Schwerschrumpffolien benötigen darüberhinaus weniger Energie und Zeit beim Schrumpfvorgang.

Wie aus den nachfolgenden Beispielen ersichtlich ist, besitzen Folien, die aus gemäß dem Verfahren der Erfindung hergestelltem Ethylen-Mischpolymerisat gezogen wurden, die oben erwähnten ausgezeichneten Eigenschaften. Dies bedeutet, daß im Vergleich zu bekannten Folien bei Beibehaltung der Stärke eine höhere Belastbarkeit möglich ist, oder daß bei gleichbleibender Belastbarkeit Folien geringerer Stärke verwendet werden können. Die Herstellung der Mischpolymerisate und der Folien kann in überaus einfacher Weise erfolgen.

An hand der folgenden Beispiele wird die Erfindung erläutert:

**Beispiel 1**

1.000.000 Gew.-Teile eines Reaktionsgemisches, bestehend aus 970.000 Gew.-Teilen Ethylen, 25.000 Gew.-Teilen Vinylacetat und 5.000 Gew.-Teilen Propylen, werden in bekannter Weise auf 2.100 bar verdichtet.

Von diesem Gemisch werden 500.000 Gew.-Teile mit 5 Gew.-Teilen Sauerstoff vermischt und einem Vorheizer zugeführt, in dem dieses Gemisch auf 190° C aufgeheizt wird. Das vorgewärmte Gemisch wird am Anfang des Rohrreaktors eingespeist.

An der Stelle des Rohrreaktors, an der die Reaktion nach Durchlaufen eines Temperaturmaximums von 260° C weitgehend abgeklungen ist, werden weitere 140.000 Gew.-Teile des verdichteten Gasgemisches mit 7 Gew.-Teilen Sauerstoff vermischt und mit einer Temperatur von 40° C in den Reaktor eingeführt. Nach der Einspeisestelle werden 200° C im Gasgemisch nicht unterschritten.

An der Stelle des Reaktors, an der die neu initiierte Reaktion - wie oben beschrieben - nach Durchlauf von 260° C abgeklungen ist, werden weitere 160.000 Gew.-Teile des Gasgemisches vermischt mit 8 Gew.-Teilen Sauerstoff, welches Gemisch eine Temperatur von 40° C aufweist, eingespeist.

Nach der Einspeisestelle werden 200° C nicht unterschritten.

An der nächsten Stelle, an der die Reaktion, wie oben beschrieben, nach Durchlaufen von 260° C abgeklungen ist, werden die restlichen 200.000 Gew.-Teile des Gasgemisches vermischt mit 10 Gew.-Teilen Sauerstoff, mit einer Temperatur von 40° C eingeführt. Nach der Einspeisestelle werden 200° C nicht unterschritten.

Nach Durchlaufen des letzten Temperaturmaximums von 260° C wird das Gas-/Polymergemisch weiter abgekühlt und in bekannter Weise stufenweise entspannt.

Die 190.000 Gew.-Teile gewonnenen Produktes haben eine Dichte von 0,920 bis 0,922 g/cm$^3$ und einen Schmelzindex von 0,3 g/10 min.

**Beispiel 2**

Aus dem gemäß Beispiel 1 hergestellten Mischpolymerisat werden Folien auf einem Blasextruder hergestellt.

Die technischen Daten des Extruders sind folgende:

```
Blaskopfdurchmesser :          150   mm

Spaltweite :                   0,6   mm

Schneckendurchmesser           40    mm

Schneckeneinzugdurchmesser :   28    mm

Schneckenspitze :              mit normalem Scherkopf

Schneckenlänge :               L/D = 10/1

Siebpaket :                    1 grobes Sieb

                               Maschenweite:  0,5   mm

                               2 feine Siebe

                               Maschenweite:  0,32 mm

Kühlring :                     ausgebildet als Irisblende
```

Für die Herstellung der Folie wurde ein Aufblaseverhältnis von 2,5 : 1 und eine Folienstärke von 90 um gewählt.

Die Eigenschaften der Folien und Vergleichsfolien sind in den Tabellen 1 bis 3 zusammengestellt.

Die Messungen wurden nach DIN bzw. ASTM durchgeführt.

## Polymerisate des Stands der Technik

Tabelle 1

0 082 502

| Polyethylen-Typ | | MFI 2,16 kp 190°C g/10min | Dichte 23°C g/cm³ | 90μ Folie, Aufblasverhältnis 1 : 2,5 | | | | | | Dart-drop g/μm |
|---|---|---|---|---|---|---|---|---|---|---|
| | | | | Reissfestigkeit | | | | Dehnung | | |
| | | | | N/mm² | | p/mm² | | % | | |
| | | | | längs | quer | längs | quer | längs | quer | |
| Ethylen-Homopolymerisate | Hoechst D 1018 | 0,28 | 0,9179 | 17,76 | 23,92 | 1812 | 2440 | 368 | 513 | 4,53 |
| | Soelen 15303-003 | 0,26 | 0,9182 | 18,84 | 23,43 | 1922 | 2390 | 374 | 550 | 4,95 |
| | BASF 2441 D | 0,30 | 0,9228 | 21,76 | 27,03 | 2220 | 2758 | 434 | 598 | 3,28 |
| | CdF FB 3003 | 0,27 | 0,9201 | 17,73 | 23,95 | 1809 | 2443 | 343 | 530 | 4,77 |
| Ethylen-Vinylacetat- Mischpolymerisate | Bayer V 22 D 464 | 0,20 | 0,9268 | 20,15 | 25,81 | 2056 | 2633 | 431 | 544 | 4,10 |
| | Bayer V 22 F 464 | 0,70 | 0,9262 | 20,70 | 22,66 | 2112 | 2312 | 544 | 609 | 3,59 |
| | BASF V 2524 E | 0,45 | 0,9248 | 22,35 | 24,49 | 2280 | 2498 | 518 | 597 | 4,49 |
| LLDPE | CdF FW 1280 | 0,60 | 0,9242 | 30,00 | 31,66 | 3060 | 3230 | 773 | 795 | 2,59 |
| | CdF FW 1290 | 0,97 | 0,9168 | 27,92 | 32,15 | 2848 | 3280 | 714 | 751 | 4,33 |
| | Escortelle LL 1050 XX | 0,95 | 0,9182 | 33,72 | 34,01 | 3440 | 3470 | 875 | 850 | 3,09 |
| | Escortelle LL 1250 XX | 0,93 | 0,9245 | 31,32 | 31,91 | 3195 | 3255 | 872 | 868 | 1,84 |
| | Unifos LP LD 8010 | 0,91 | 0,9253 | 31,48 | 32,45 | 3211 | 3310 | 813 | 773 | 1,47 |
| | Unifos LP LD 8020 | 0,85 | 0,9201 | 30,45 | 32,59 | 3106 | 3325 | 865 | 869 | 1,80 |
| | Dowlex 2045 | 1,05 | 0,9200 | 35,46 | 37,13 | 3617 | 3788 | 836 | 856 | 5,85 |

Polymerisate gemäß der Erfindung

Tabelle 2

| Polyethylen-Typ | | MFI 2,16kp 190°C g/10min | Dichte 23°C g/cm³ | 90µmFolie, Aufblasverhältnis 1 : 2,5 | | | | | | Dart-drop g/µm |
| | | | | Reissfestigkeit | | | | Dehnung % | | |
| | | | | N/mm² | | p/mm² | | | | |
| | | | | längs | quer | längs | quer | längs | quer | |
|---|---|---|---|---|---|---|---|---|---|---|
| Ethylen-Vjnylacetat- | CM 2313 | 0,28 | 0,9260 | 22,10 | 28,11 | 2255 | 2868 | 482 | 580 | 5,33 |
| Mischpolymerisate/Terpoly- | CM 2316 | 0,24 | 0,9265 | 25,61 | 29,87 | 2613 | 3047 | 530 | 588 | 5,35 |
| mere | CM 2314 | 0,33 | 0,9253 | 24,11 | 28,92 | 2460 | 2950 | 542 | 590 | 6,18 |
| | CM 2315 | 0,31 | 0,9242 | 24,89 | 29,09 | 2539 | 2968 | 558 | 596 | 6,67 |
| | CM 3026 | 0,22 | 0,9232 | 23,81 | 31,13 | 2429 | 3176 | 423 | 543 | 7,73 |
| | CM 2321 | 0,67 | 0,9233 | 22,92 | 28,00 | 2338 | 2856 | 606 | 611 | 5,73 |
| | CM 3028 | 0,59 | 0,9232 | 23,69 | 26,50 | 2417 | 2703 | 516 | 579 | 6,46 |

0 082 502

Tabelle 3

## Polymerisate gemäß der Erfindung

| Poly-ethylen-Typ | | Moderator | Konzentration nach Analyse in % |
|---|---|---|---|
| Ethylen-Vinylacetat— | CM 2313 | Propan | 1,6 |
| Mischpolymerisate / Terpolymere | CM 2314 | Propylen | 0,7 |
| | CM 2315 | Propylen | 0,5 - 0,7 |
| | CM 2316 | Propionaldehyd | 0,2 |
| | CM 2321 | Propionaldehyd | 0,2 |
| | CM 3026 | Propylen | 0,4 |
| | CM 3028 | Propylen | 0,4 |

0 082 502

**Patentansprüche**

1. Verwendung von Ethylen-Mischpolymerisaten, die einpolymerisiert enthalten:

95,9 bis 99 Gew.-%-Ethylen, sowie zusätzlich

a) 4 bis 0,3 Gew.-% Vinylacetat und/oder Vinylpropionat und

b) 3,5 bis 0,1 Gew.-% gesättigte aliphatische Aldehyde mit 2 bis 5 C-Atomen im Alkylteil, gesättigte aliphatische Ketone mit 1 oder 2 C-Atomen in den Alkvlteilen, Alkene mit 3 bis 6 Kohlenstoffatomen und/oder Cyclohexen,

mit einer Dichte von 0,920 g/cm$^3$ bis 0,930 g/cm$^3$, einem Schmelzindex MFI 190/2,16 von 0,1 bis 0,5 g/10 min, einem Zahlenverhältnis der Schmelzindices (MFI 190/5): (MFI 190/2,16) von 3,2 bis 3,9, einer Scherviskosität bei 200° C bei einer Schubspannung von 4.10$^5$ Pa im Bereich von 1500 bis 2000 Pa . s und bei einer Schubspannung von 6 . 10$^4$ Pa im Bereich von 80 bis 120 Pa . s, einer Vicat-Temperatur von 104 bis 106°C, einer Schlag-Zugzähigkeit von mehr als 1800 mJ/mm$^2$ und einer Spannungsrißkorrision von mehr als 1500 h,

zur Herstellung von Schwergutsäcken für schweres Füllgut mit einem Schüttgewicht von mehr als 0,3 kg/dm$^3$ und Füllgutmengen von mindestens etwa 10 kg oder als Schrumpffolien.

2. Verwendung nach Anspruch 1, dadurch gekennzeichnet, daß das Ethylen-Mischpolymerisat hergestellt ist durch kontinuierliche Polymerisation der Monomeren in einem rohrförmigen Reaktor bei Drucken von 1000 bis 4000 bar und erhöhter Temperatur in Gegenwart von radikalbildenden Katalysatoren und Kettenübertragungsmitteln, wobei das Monomerengemisch, enthaltend

a) 0,3 bis 4,0 Gew.-% Vinylacetat und/oder Vinylpropionat

b) 0,2 bis 3,5 Gew.-% gesättigte aliphatische Aldehyde mit 2 bis 5 C-Atomen im Alkylteil, gesättigte aliphatische Ketone mit 1 oder 2 C-Atomen in den Alkylteilen, Alkene mit 3 bis 6 Kohlenstoffatomen und/oder Cyclohexen

bei Temperaturen im Bereich von 190 bis 270ºC polymerisiert wird, wobei

30 bis 70 Gew.-% des Monomerengemisches am Eingang des Rohrreaktors und der restliche Anteil an mindestens einer Stelle längs des Rohrreaktors eingespeist werden.

3. Verwendung nach Anspruch 1 oder 2, dadurch gekennzeichnet, daß das Ethylen-Mischpolymerisat als Komponente a) Vinylacetat enthält.

4. Verwendung nach einem oder mehreren der Ansprüche 1 bis 3, dadurch gekennzeichnet, daß das Ethylen-Mischpolymerisat als Komponente b) gesättigte aliphatische Ketone mit 1 oder 2 C-Atomen in den Alkylteilen enthält.

5. Verwendung nach Anspruch 4, dadurch gekennzeichnet, daß das Ethylen-Mischpolymerisat Aceton oder Methylethylketon enthält.

6. Verwendung nach einem oder mehreren der Ansprüche 1 bis 3, dadurch gekennzeichnet, daß das Ethylen-Mischpolymerisat als Komponente b) Propen enthält.

7. Verwendung nach einem oder mehreren der Ansprüche 1 bis 6, dadurch gekennzeichnet, daß das Ethylen-Mischpolymerisat eine Dichte von 0,924 bis 0,928 g/cm$^3$ hat.

8. Verwendung nach einem oder mehreren der Ansprüche 1 bis 7, dadurch gekennzeichnet, daß das Ethylen-Mischpolymerisat einen Schmelzindex MFI 190/216 von 0,15 bis 0,4 g/10 min aufweist.

9. Verwendung nach einem oder mehreren der Ansprüche 1 bis 8, dadurch gekennzeichnet, daß das Ethylen-Mischpolymerisat bei Drucken von 2000 bis 3500 bar hergestellt worden ist.

10. Verwendung nach einem oder mehreren der Ansprüche 1 bis 9, dadurch gekennzeichnet, daß das Ethylen-Mischpolymerisat einen dart-drop-Wert WF 50 von mindestens 450 g aufweist.

11. Schwergutsäcke für schweres Füllgut mit einem Schüttgewicht von mehr als 0,3 kg/dm$^3$ und Füllgutmengen von mindestens etwa 10 kg, dadurch gekennzeichnet, daß sie aus einem Ethylen-Mischpolymerisat nach den Ansprüchen 1 bis 10 bestehen.

12. Verfahren Zur Herstellung des Ethylen-Mischpolymerisats nach den Ansprüchen 1 bis 10 durch kontinuierliche Polymerisation der Monomeren in einem rohrförmigen Reaktor bei Drucken von 1000 bis 4000 bar und erhöhter Temperatur in Gegenwart von radikalbildenden Katalysatoren und Kettenübertragungsmitteln, dadurch gekennzeichnet, daß das Monomergemisch, das zusätzlich zu 95,9 bis 99 Gew.-% Ethylen enthält

a) 0,3 bis 4,0 Gew.-% Vinylacetat und/oder Vinylpropionat und

b) 0,1 bis 3,5 Gew.-% gesättigte aliphatische Aldehyde mit 2 bis 5 C-Atomen im Alkylteil, gesättigte aliphatische Ketone mit 1 oder 2 C-Atomen in den Alkylteilen, Alkene mit 3 bis 6 Kohlenstoffatomen und/oder Cyclohexen,

bei Temperaturen im Bereich von 190 bis 270ºC polymerisiert wird, wobei

30 bis 70 Gew.-% des Monomergemisches am Eingang des Rohrreaktors und der restliche Anteil an mindestens Zwei Stellen längs des Rohrreaktors eingespeist werden,

dessen Verhältnis von Länge zu Durchmesser im Bereich von etwa 25000 bis etwa 60000 : 1 liegt.

13. Verfahren nach Anspruch 12, dadurch gekennzeichnet, daß von dem Monomerengemisch

40 bis 60 Gew.-% am Eingang des Rohrreaktors,

15 bis 11 Gew.-% an der ersten Einspeisestelle,

19 bis 13 Gew.-% an der zweiten Einspeisestelle und

26 bis 16 Gew.-% an der dritten Einspeisestelle längs des Rohrreaktors eingespeist werden.

14. Verfahren nach Anspruch 12, dadurch gekennzeichnet, daß von dem Monomerengemisch

0 082 502

30 bis 50 Gew.-% am Eingang des Rohrreaktors,
11 bis 10 Gew.-% an der ersten Einspeisestelle,
14 bis 11 Gew.-% an der Zweiten Einspeisestelle,
19 bis 13 Gew.-% an der dritten Einspeisestelle und
26 bis 16 Gew.-% an der vierten Einspeisestelle längs des Rohrreaktors eingespeist werden.

5. Verwendung der Ethylen-Mischpolymerisate nach den Ansprüchen 1 bis 10 zur Herstellung von Folien mit einer Stärke von 10 bis 300 µm.

## Claims

1. Use of ethylene copolymers which contain, polymerised therein:
from 95.9 to 99% by weight of ethylene as well as, in addition,
a) from 4 to 0.3% by weight of vinyl acetate and/or vinyl propionate and
b) from 3.5 to 0.1% by weight of saturated aliphatic aldehydes with from 2 to 5 carbon atoms in the alkyl portion, saturated aliphatic ketones with 1 or 2 carbon atoms in the alkyl portions, alkenes with from 3 to 6 carbon atoms and/or cyclohexene,
having a density of from 0.920 to 0.930 g/cm$^3$, a melt index MFI 190/2.16 of from 0.1 to 0.5 g/10 min, a melt index numerical ratio (MFI 190/5): (MFI190/2.16) of from 3.2 to 3.9, a shear viscosity at 200°C at a shearing stress of 4 . 10$^5$ Pa in the range of from 1500 to 2000 Pa . s and at a shearing stress of 6 . 10$^4$ in the range of from 80 to 120 Pa.s, a Vicat temperature of from 104 to 106°C, a tensile impact toughness higher than 1800 mJ/mm$^2$ and a stress corrosion cracking greater than 1500 h,
for the production of sacks for heavy goods having a bulk density higher than 0.3 kg/dm$^3$ and filling quantities of at least about 10 kg or as shrink films.

2. Use according to Claim 1, characterised
in that the ethylene copolymer is produced by continuous polymerisation of the monomers in a tubular reactor at pressures of from 1000 to 4000 bar and at elevated temperature in the presence of radical-forming catalysts and chain transfer agents, wherein the monomer mixture contains
a) from 0.3 to 4.0% by weight of vinyl acetate and/or vinyl propionate,
b) from 0.2 to 3.5% of saturated aliphatic aldehydes with from 2 to 5 C-atoms in the alkyl portion, saturated aliphatic ketones with 1 or 2 C-atoms in the alkyl portions, alkenes with from 3 to 6 carbon atoms and/or cyclohexene,
and is polymerised at temperatures in the range of from 190 to 270°C,
from 30 to 70% by weight of the monomer mixture being introduced at the inlet of the tubular reactor and the remainder at at least one point along the tubular reactor.

3. Use according to Claim 1 or 2, characterised in that the ethylene copolymer contains vinyl acetate as component a).

4. Use according to one or more of Claims 1 to 3, characterised in that the ethylene copolymer contains saturated aliphatic ketones with 1 or 2 C-atoms in the alkyl portions as component b).

5. Use according to Claim 4, characterised in that the ethylene copolymer contains acetone or ethylmethyl ketone.

6. Use according to one or more of Claims 1 to 3, characterised in that the ethylene copolymer contains propene as component b).

7. Use according to one or more of Claims 1 to 6, characterised in that the ethylene copolymer has a density of from 0.924 to 0.928 g/cm$^3$.

8. Use according to one or more of Claims 1 to 7, characterised in that the ethylene copolymer has a melt index MFI 190/216 of from 0.15 to 0.4 g/10 min.

9. Use according to one or more of Claims 1 to 8, characterised in that the ethylene copolymer has been produced at pressures of from 2000 to 3500 bar.

10. Use according to one or more of Claims 1 to 9, characterised in that the ethylene copolymer has a dart-drop value WF 50 of at least 450 g.

11. Heavy goods sacks for heavy fillings having a bulk density higher than 0.3 kg/dm$^3$ and filling quantities of at least about 10 kg, characterised in that they are composed of an ethylene copolymer according to Claims 1 to 10.

12. A process for the production of the ethylene copolymer according to Claims 1 to 10 by continuous polymerisation of the monomers in a tubular reactor at pressures of from 1000 to 4000 bar and at elevated temperature in the presence of radical-forming catalysts and chain transfer agents, characterised in that the monomer mixture, which in addition to 95.9 to 99% by weight of ethylene contains
a) from 0.3 to 4.0% by weight of vinyl acetate and/or vinyl propionate and
b) from 0.1 to 3.5% by weight of saturated aliphatic aldehydes with from 2 to 5 C-atoms in the alkyl portion, saturated aliphatic ketones with 1 or 2 C-atoms in the alkyl portions, alkenes with from 3 to 6 carbon atoms and/or cyclohexene,
is polymerised at temperatures in the range of from 190 to 270°C,
from 30 to 70% by weight of the monomer mixture being introduced at the inlet of the tubular reactor and

11

the remainder at at least two points along the tubular reactor,

the length to diameter ratio of which lies in the range of from about 25000 to about 60000 :1.

13. A process according to Claim 12, characterised in that, of the monomer mixture,

from 40 to 60% by weight are introduced at the inlet of the tubular reactor,

from 15 to 11% by weight are introduced at the first inlet point,

from 19 to 13% by weight are introduced at the second inlet point, and

from 26 to 16% by weight are introduced at the third inlet point along the tubular reactor.

14. A process according to Claim 12, characterised in that, of the monomer mixture,

from 30 to 50% by weight are introduced at the inlet of the tubular reactor,

from 11 to 10% by weight are introduced at the first inlet point,

from 14 to 11% by weight are introduced at the second inlet point,

from 19 to 13% by weight are introduced at the third inlet point and

from 26 to 16% by weight are introduced at the fourth inlet point along the tubular reactor.

15. Use of the ethylene copolymers according to Claims 1 to 10 for the production of films having a thickness of from 10 to 300 μm.

## Revendications

1 - Utiliastion de copolymères de l'éthylène contenant, à l'état copolymérisé:

95,9 à 99 % en poids d'éthylène, et

a) 4 à 0,3 % en poids d'acétate de vinyle et/ou de propionate de vinyle, et

b) 3,5 à 0,1 % en poids d'aldéhydes aliphatiques saturés contenant 2 à 5 atomes de carbone dans la partie alkyle, de cétones aliphatiques saturées contenant 1 ou 2 atomes de carbone dans les parties alkyle, d'alcènes en C 3-C 6 et/ou de cyclohexène, à une densité de 0,920 à 0,930 g/cm$^3$, un indice de fusion MFI 190/2,16 de 0,1 à 0,5 g/10 mn, un rapport numérique des indices de fusion (MFI 190/5 : (MFI 190/2,16) de 3,2 à 3,9, une viscosité au ciaillement à 200°C sous une tension de cisaillement de 4.10$^5$ Pa dans l'intervalle de 1500 à 2000 Pa.s et sous une tension de cisaillement de 6.10$^4$ Pa dans l'intervalle de 80 à 120 Pa.s, une température Vicat de 104 à 106°C, une résilience supérieure à 1800 mJ/mm et une corrosion par fissures de tension supérieure à 1500 heures, pour la fabrication de sacs de produits lourds à une densité apparente supérieure à 0,3 kg/dm$^3$ et à des quantités d'ensachage d'au moins 10 kg environ, ou de feuilles rétractables.

2 - Utilisation selon la revendication 1, caractérisée en ce que le copolymère de l'éthylène est préparé par polymérisation continue des monomères dans un réacteur tubulaire à des pressions de 1000 à 4000 bar et à température élevée, en présence de catalyseurs radicaleires et d'agents de transfert des chaînes, le mélange des monomères, contenant

a) 0,3 à 4,0 % en poids d'acétate de vinyle et/ou de propionate de vinyle,

b) 0,2 à 3,5 % en poids d'aldéhydes aliphatiques saturés contenant 2 à 5 atomes de carbone dans la partie alkyle, de cétones aliphatiques saturées contenant 1 ou 2 atomes de carbone dans les parties alkyle, d'alcènes en C 3-C 6 et/ou de cyclohexène, étant polymérisé à des températures dans l'intervalle de 190 à 270°C, de 30 à 70 % en poids du mélange des monomères étant introduits à l'entrée du réacteur tubulaire et le reste en au moins un endroit le long du réacteur tubulaire.

3 - Utilisation selon la revendication 1 ou 2, caractérisée en ce que le copolymère de l'éthylène contient de l'acétate de vinyle en tant que composant a).

4 - Utilisation selon une ou plusieurs des revendications 1 à 3, caractérisée en ce que le copolymère de l'éthylène contient en tant que composant b) des cétones aliphatiques saturées contenant 1 ou 2 atomes de carbone dans les parties alkyle.

5 - Utilisation selon la revendication 4, caractérisée en ce que le copolymère de l'éthylène contient de l'acétone ou de la méthyléthylcétone.

6 - Utilisation selon une ou plusieurs des revendications 1 à 3, caractérisée en ce que le copolymère de l'éthylène contient en tant que composant b) du propène.

7 - Utilisation selon une ou plusieurs des revendications 1 à 6, caractérisée en ce que le copolymère de l'éthylène a une densité de 0,924 à 0,928 g/cm$^3$.

8 - Utilisation selon une ou plusieurs des revendications 1 à 7, caractérisée en ce que le copolymère de l'éthylène a un indice de fusion MFI 190/216 de 0,15 à 0,4 g/10 mn.

9 - Utilisation selon une ou plusieurs des revendications 1 à 6, caractérisée en ce que le copolymère de l'éthylène est préparé à des pressions de 2000 à 3500 bar.

10 - Utilisation selon une ou plusieurs des revendications 1 à 9, caractérisée en ce que le copolymère de l'éthylène a une valeur dart-trop WF 50 d'au moins 450 g.

11 - Sacs pour produits lourds à une densité apparente supérieure à 0,3 kg/dm$^3$ et à des quantités d'ensachage d'au moins 10 kg environ, caractérisés en ce qu'ils consistent en un copolymère de l'éthylène selon les revendications 1 à 10.

12 - Procédé de préparation du copolymère de l'éthylène selon les revendications 1 à 10, par polymérisation continue des monomères dans un réacteur tubulaire à des pressions de 1000 à 4000 bar et à température élevée, en présence de catalyseurs radicalaires et d'agents de transfert des chaînes, caractérisé en ce que le mélange des monomères contenant, avec 95,9 à 99 % en poids d'éthylène,

a) 0,3 à 4,0 % en poids d'acétate de vinyle et/ou de propionate de vinyle, et

b) 0,1 à 3,5 %, en poids d'aldéhydes aliphatiques saturés contenant 2 à 5 atomes de carbone dans la partie alkyle, de cétones aliphatiques saturées contenant 1 ou 2 atomes de carbone dans les parties alkyle, d'alcénes en C 3-C 6 et/ou de cyclohexène, est polymérisé à des températures dans l'intervalle de 190 à 270°C, de 30 à 70 % en poids du mélange des monomères étant introduits à l'entrée du réacteur tubulaire et le reste en au moins deux endroits le long du réacteur tubulaire, lequel présente un rapport longueur/diamètre dans l'intervalle d'environ 25 000 à 60 000:1.

13 - Procédé selon la revendication 12, caractérisé en ce que l'on introduit:

de 40 à 60 % en poids du mélange des monomères à l'entrée du réacteur tubulaire, de 15 à 11 % en poids du mélange des monomères au premier endroit d'alimentation,

de 19 à 13 % en poids du mélange des monomères au deuxième endroit d'alimentation, et

de 26 à 16 % en poids du mélange des monomères au troisième endroit d'alimentation le long du réacteur tubulaire.

14 - Procédé selon la revendication 12, caractérisé en ce que l'on introduit

de 30 à 50 % en poids du mélange des monomères à l'entrée du réacteur tubulaire,

de 11 à 10 % en poids du mélange des monomères au premier endroit d'alimentation,

de 14 à 11 % en poids du mélange des monomères au deuxième endroit d'alimentation,

de 19 à 13 % en poids du mélange des monomères au troisième endroit d'alimentation, et

de 26 à 16 % en poids du mélange des monomères au quatrième endroit d'alimentation le long du réacteur tubulaire.

15 - Utilisation des copolymères de l'éthylène selon les revendications 1 à 10 pour la fabrication de feuilles à une épaisseur de 10 à 300 microns.